(19) **Europäisches Patentamt European Patent Office Office européen des brevets**

(11) **EP 4 734 329 A1**

(12) **EUROPEAN PATENT APPLICATION**

(43) Date of publication:
   **29.04.2026  Bulletin 2026/18**

(21) Application number: **24208338.4**

(22) Date of filing: **23.10.2024**

(51) International Patent Classification (IPC):
   **H02J 50/00** (2016.01)     **H02J 15/00** (2026.01)

(52) Cooperative Patent Classification (CPC):
   **H02J 50/00;** H02J 15/00; H02J 2105/00

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **GE KH MA MD TN**

(71) Applicant: **AUTOMOUS OY**
   **02150 Espoo (FI)**

(72) Inventors:
   • **Sierla, Seppo**
     **00210 Espoo (FI)**
   • **Karhula, Niko**
     **03100 Nummela (FI)**
   • **Subramanya, Rakshith**
     **02940 Espoo (FI)**

(74) Representative: **Papula Oy**
   **P.O. Box 981**
   **00101 Helsinki (FI)**

(54) **A SCHEDULER FOR OBTAINING AN OPERATION SCHEDULE FOR AN ENERGY GENERATION SITE**

(57)  According to an aspect, an apparatus may be configured to obtain market information on one or more intervals of at least one energy market and determine an operation plan for an energy generation site based on the information. Furthermore, the apparatus may obtain an operation schedule for the energy generation site, which may be provided to cause the energy generation site to at least satisfy an offtake and balance a power grid.

FIG. 1

**EP 4 734 329 A1**

**Description**

**TECHNICAL FIELD**

The disclosure relates generally to optimization of an energy generation site and, more particularly but not exclusively, to an apparatus obtaining an operation schedule for the energy generation site.

**BACKGROUND**

Energy generation sites generally comprise an energy storage configured to balance the power grid (e.g., to either provide or draw power from or to the power grid to maintain stable frequency). The energy storage can be charged by using an onsite co-located (renewable) energy generators, such as solar panel or windmills.

If consumption exceeds generation on the power grid, the operation frequency will drop and if generation exceeds consumption, the frequency will rise. In order to be able to react to these situations, an entity responsible for managing the frequency procures balancing services from entities operating flexible generation or consumption assets. For example, in Europe, this entity is known as Transmission System Operator (TSO), whereas in the US it may be an Independent System Operator (ISO). A TSO (or ISO) may operate primary, secondary and tertiary balancing reserves for the purposes of frequency balancing.

In addition to providing energy to (or drawing from) the power grid, the energy storage may be used for providing energy to an offtake agreement between a buyer and a seller (the energy generation site) operating outside the power grid.

A controller may control charging and discharging of the energy storage, and the controller may be configured to receive control signals that instruct the controller how the energy storage should behave during different time intervals.

The time intervals may be determined based on, for example, day-ahead markets, in which market participants are required to submit bids for each bidding interval (e.g., one hour) of the next day before a gate closure time on the previous day.

**SUMMARY**

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect, an apparatus is disclosed. The apparatus may comprise: at least one processor; and at least one memory comprising instructions which, when executed by the at least one processor, cause the apparatus at least to: obtain information on one or more intervals of an energy market; determine, based at least partially on the information on the one or more intervals of the energy market, an operation plan for an energy generation site comprising at least one energy storage; obtain, based on the operation plan, an operation schedule for the energy generation site; and provide the operation schedule, causing the energy generation site at least to: satisfy an energy offtake of the energy generation site by using the at least one energy storage; and balance a power grid for at least one of the one or more intervals of the at least one energy market.

In an example embodiment of the first aspect, the instructions, when executed by the at least one processor, further cause the apparatus at least to: determine the operation plan based on a constrained quadratic model (CQM) optimization problem.

In an example embodiment of the first aspect, the instructions, when executed by the at least one processor, further cause the apparatus at least to: provide the operation plan to a computing device; and obtain the operation schedule in response to the providing the operation plan to the computing device.

In an example embodiment of the first aspect, the computing device comprises quantum computing hardware.

In an example embodiment of the first aspect, the energy generation site further comprises an alternative energy supply, and the instructions, when executed by the at least one processor, further cause the apparatus at least to: obtain a cost signal from the alternative energy supply; and determine the operation plan further based on the cost signal to satisfy the energy offtake.

In an example embodiment of the first aspect, the instructions, when executed by the at least one processor, further cause the apparatus at least to: obtain information on which frequency balancing reserves the energy generation site is prequalified for and limits of a power response the energy generation site can provide for each frequency balancing reserve it is prequalified for; and determine the operation plan further based on the information on the frequency balancing reserves.

In an example embodiment of the first aspect, the operation schedule comprises scheduling instructions for an energy storage charger configured to charge the at least one energy storage, and wherein the scheduling instructions causes the energy storage charger at least to exploit the energy storage such that the utilization of the energy storage charger is shifted to intervals with lower energy demand in the power grid.

In an example embodiment of the first aspect, the scheduling instructions for the energy storage charger further causes the energy storage charger to use the energy generator such that a maximum power flow limit at a grid coupling is not exceeded.

In an example embodiment of the first aspect, the scheduling instructions for the energy storage charger further causes the energy storage charger to ensure that several simultaneous services provided by the energy storage charger will not cause the energy storage charger's minimum or maximum power flow limit to be exceeded.

In an example embodiment of the first aspect, the instructions, when executed by the at least one processor, further cause the apparatus at least to: obtain a bid to a power exchange; and provide the bid to the power exchange.

In an example embodiment of the first aspect, the bid is obtained based on at least two different pricing levels.

In an example embodiment of the first aspect, the at least one energy market comprises at least one day-ahead energy market and one or more intraday energy markets.

In an example embodiment of the first aspect, the energy generation site further comprises a secondary energy storage, and the instructions, when executed by the at least one processor, further causes the apparatus at least to: determine the operation plan for the energy generation site further based on: a maximum power that can be drawn from the power grid to the secondary energy storage and; a maximum power that can be supplied to the grid by discharging the secondary storage.

According to a second aspect, a method is disclosed. The method may comprise: obtaining information on one or more intervals of an energy market; determining, based at least partially on the information on the one or more intervals of the at least one energy market, an operation plan for an energy generation site comprising at least one energy storage; obtaining, based on the operation plan, an operation schedule for the energy generation site; and providing the operation schedule, causing the energy generation site at least to: satisfy an energy offtake of the energy generation site by using the at least one energy storage; and balance a power grid for at least one of the one or more intervals of the at least one energy market.

According to a third aspect, a computer program is disclosed. The computer program may comprise instructions causing an apparatus to perform the method according to the second aspect.

According to a fourth aspect, an apparatus is disclosed. The apparatus may comprise at least: means for obtaining information on one or more intervals of at least one energy market; means for determining, based at least partially on the information on the one or more intervals of the at least one energy market, an operation plan for an energy generation site comprising at least one energy storage; means for obtaining, based on the operation plan, an operation schedule for the energy generation site; and means for providing the operation schedule, causing the energy generation site at least to: satisfy an energy offtake of the energy generation site using the at least one energy storage; and balance a power grid for at least one of the one or more intervals of the at least one energy market.

## DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:

FIG. 1 illustrates an energy management system, wherein example embodiments may be implemented in.
FIG. 2 illustrates a block diagram of a computing embodiment configured to solve an optimization problem according to an example embodiment.
FIG. 3 illustrates an example efficiency curve of an energy storage charger.
FIG. 4 illustrates an apparatus configured to practice example embodiments.
FIG. 5 illustrates a method according to an example embodiment.
FIG. 6 illustrates an example timing diagram for energy market bidding.

Like reference numerals are used to designate like parts in the accompanying drawings.

## DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

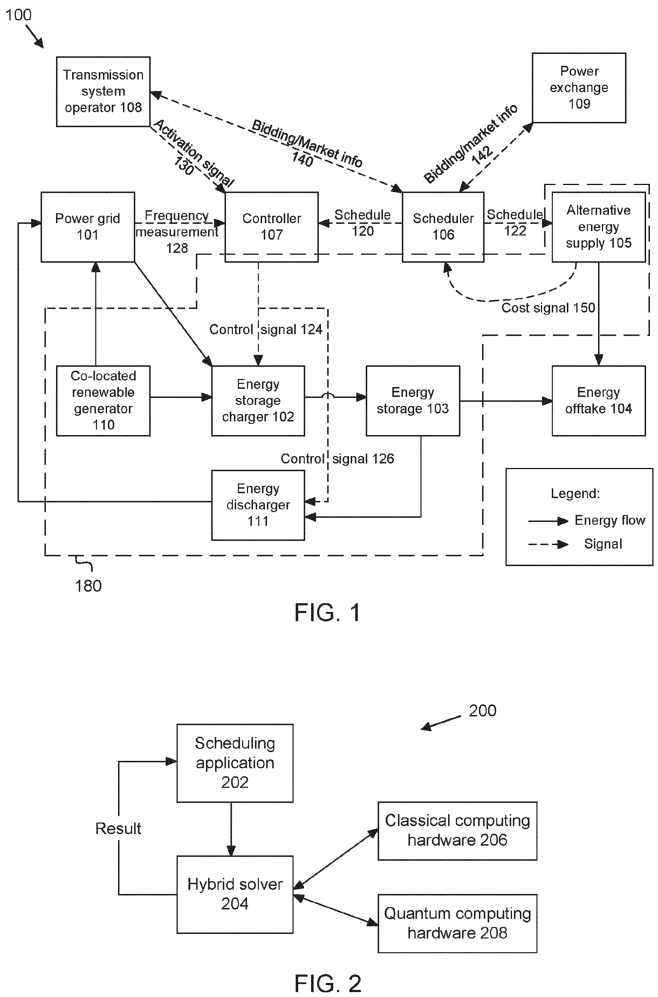

Fig. 1 illustrates an example energy management system 100, wherein example embodiments may be implemented in. The energy management system 100 may comprise a power grid 101 configured to provide energy to different consumers connected to the power grid 101.

The energy management system 100 may further comprise a transmission system operator 108 (TSO 108) responsible for managing frequency balancing services from entities operating flexible generation or consumption assets. In the US, the TSO 108 may comprise an Independent System Operator (ISO) however, for purposes of clarity of the description, it will be referred to as the TSO 108. The TSO 108 may operate primary, secondary and tertiary balancing reserves for the purposes of frequency balancing. The primary reserves may react within seconds to frequency deviations in the power grid 101 and often require the provider of the services to automatically monitor grid frequency and trigger a required response. If the frequency deviation should continue, the secondary reserves may eventually replace the primary reserves and the tertiary reserves may respectively replace the secondary reserves. An activation signal 130 from the TSO 108 to a controller 107 illustrates, how a frequency reserve may be activated for an energy generation site 180 (enclosed by the dashed lines).

The controller 107 may be located on-site the energy generation site 180, or it may be comprised in an off-site computing machine, such as a cloud-computing service. The controller 107 may be configured to provide a control signal 124 to an energy storage charger 102 and a control signal 126 to an energy storage discharger 111 located on-site the energy generation site 180. The energy storage charger 102 can be configured to charge energy to at least one energy storage 103 located on-site through the power grid 101 and/or an optional co-located (renewable) energy generator 110. The energy storage discharger 111 may be configured to discharge the at least one energy storage 103 to the power grid 101. The charge and discharge operations may be controlled by the control signal 124 and the control signal 126, for example.

The at least one energy storage 103 may comprise, for example, a chemical battery, thermal storage, hydrogen fuel storage, kinetic- or gravitational potential energy storage, among other options. The at least one energy storage 103 may be referred to as energy storage 103 for the purposes of the description.

For example, if the at least one energy storage 103 is an electric battery, the energy storage charger 102 and the energy storage discharger 111 may comprise a bi-directional inverter.

As another example, if the energy storage 103 comprises a hydrogen tank, the energy storage charger 102 may comprise an electrolyzer and the energy storage discharger 111 may comprise a fuel cell.

As another example, if the Energy storage 103 is an elevator or crane that lifts a heavy load in order to store gravitational potential energy, the energy storage charger 102 may comprise an electric motor of the elevator or crane, and the energy storage discharger 111 may comprise the same motor which has switched into generator mode.

As another example, if the energy storage 103 is a pumped hydro reservoir, the Electrically powered energy storage charger 102 could be a pumping station, and the energy storage discharger 111 could be a system consisting of a turbine and generator.

As another example, if the energy storage 103 is a flywheel storing kinetic energy, an electric motor generator can perform the function of the energy storage charger 102 and the energy storage discharger 111.

The energy generation site 180 may be bound to an offtake agreement 104 (offtake 104) as a seller of energy. The offtake 104 may be satisfied with (excess) energy provided by the energy storage 103.

Optionally, there may be an alternative energy supply 105 on-site, which may be dispatched to supply the offtake 104.

An example embodiment of a scheduler 106 may be located on-site or off-site, similarly to the controller 107. It is at least one objective of the description to provide a solution, in which the scheduler 106 obtains information on one or more intervals of at least one energy market. Further, the scheduler 106 may determine (or prepare), based at least partially on the information on the one or more intervals of the at least one energy market, an operation plan for the energy generation site 180 and obtain, based on the operation plan, an operation schedule for the energy generation site.

'To prepare the operation plan' may comprise to determine the operation plan - i.e., the scheduler 106 may determine the operation plan, based on the information on the one or more intervals of the at least one energy market and information such as which entities (e.g., the alternative energy supply 105, the energy discharger 111 etc.) are present in the energy generation site 180.

In the context of the description, the information on the one or more intervals of the at least one energy market may comprise not only economic parameters defined by the market, but additionally parameters/constraints depending on the energy generation site 180 itself, as each interval the energy generation site 180 participates in depends also on the internal characteristics of the site, therefore preparing the operation plan depends on a plurality of aspects. The information on the one or more intervals of the at least one energy market may comprise, for example, pricing forecasts for the whole market cycle (e.g., a full day forecast for each interval).

In other words, the one or more intervals of the at least one energy market may comprise a market cycle (e.g., a full cycle, such as a day-ahead market comprising 24 one-hour intervals, such as a FFR market). Therefore, the information on the one or more intervals of the at least one energy market may comprise information on one or more energy markets.

Furthermore, the one or more intervals of the at least one energy market, in the context of the description, may comprise each market interval for which bids must be submitted before gate closure. For all day-ahead markets, the one or more intervals comprises all the hours of the next day, for example. For intraday markets, namely the aFRR Energy U/D markets, there is a separate gate for each 15 min market interval, so the one or more intervals of the at least one energy market is at least one market interval of the intraday market.

The operation schedule, when provided to the energy generation site 180, may cause the energy generation site 180 at least to: i) satisfy the energy offtake 104 of the energy generation site 180 by using the at least one energy storage 103; and ii) balance the power grid 101 for at least one of the one or more intervals. The energy offtake 104 can be satisfied for at least one of the one or more intervals of the at least one energy market - in other words, the energy offtake may not be dependent on an energy market per se, but the energy offtake 104 can be satisfied during these said intervals based on the operation schedule.

The operation schedule can be provided to the energy generation site 180 by, for example, providing the operation schedule to the controller 107, as illustrated at 120, the controller 107 comprising control over the energy storage charger 102 and the energy storage discharger 111. The operation schedule may comprise, for example, scheduling instructions or set points for the controller 107 for each interval.

At least a portion of the information on the one or more intervals of the at least one energy market may be obtained from a power exchange 109 and the TSO 108. An example of the at least one energy market may comprise, for example, a day-ahead market (e.g., 24 one hour intervals or portions thereof) determined by the power exchange 109.

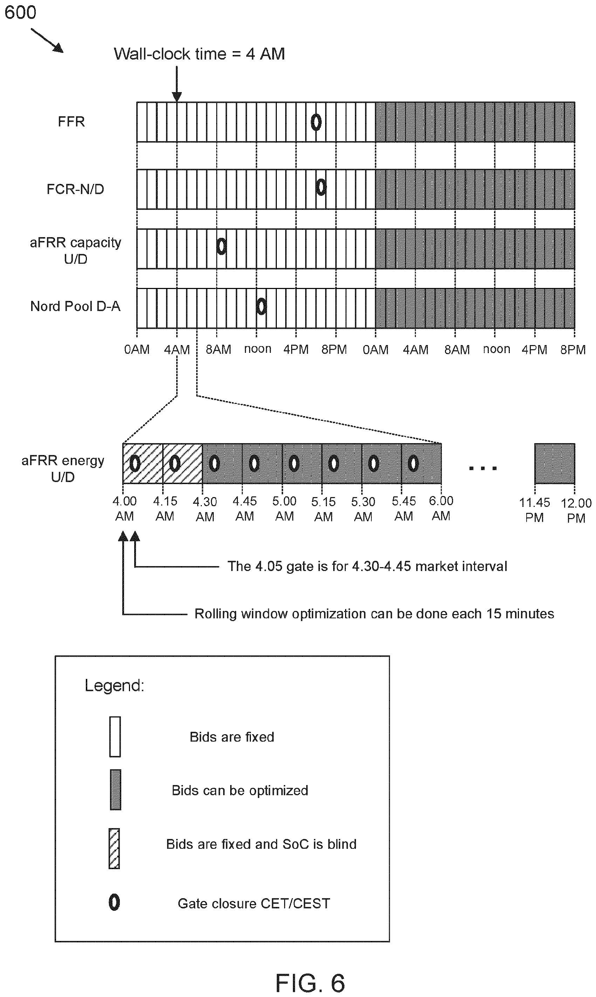

In the case of the day-ahead market, market participants are required to submit bids for the bidding intervals of the next day to the power exchange 109 before a gate closure time on the previous day. A common bidding interval is one hour (1h), but this may vary between countries, and other intervals, such as 4h and 15 minutes are in use or foreseen. In the description, index $t$ will be used to denote the hour, with a value of 0 corresponding to hour 00-01 and value 23 corresponding to hour 23-24. An index $t'$ may be used to denote, for example, portions or multiplications of $t$ (e.g., ¼$t$, 2$t$, etc.) depending on the market cycle of the energy market. Fig. 6 may be referred to a detailed example of bidding to separate markets.

Furthermore, in some embodiments, the controller 107 may obtain, from the power grid 101, a frequency measurement 128 to monitor the frequency.

In at least one example embodiment, the scheduler 106 may dispatch the alternative energy supply 105 to satisfy the offtake 104. The alternative energy supply 105 dispatch may be controlled by an alternative operation schedule from the scheduler 106 to the alternative energy supply 105, as illustrated at 122 in Fig. 1. For example, the alternative energy supple 105 may be a gas turbine or biofuel plant. The alternative energy supply 105 may have a cost signal 150, which the scheduler 106 can consider, when preparing the operation plan, whether it is more advantageous to use this alternative energy instead of the utilizing the energy storage charger 102.

It will be noted, that while the alternative operation schedule at 122 is illustrated as a separate signal from the scheduler 106 to the alternative energy supply 105, the operation schedule, at 120, for the energy generation site 180 may comprise the alternative operation schedule (at operation 122) in some embodiments, depending how the energy generation site 180 is configured.

In some embodiments, in which the energy storage discharger 111 is included, the offtake 104 may be zero.

Furthermore, one or more of the objectives may include four elements. Firstly, consumption of electricity by the energy storage charger 102 should advantageously be scheduled to periods of low demand corresponding to bidding intervals of the power exchange 109 with low price. Secondly, participation on frequency reserves should advantageously be scheduled to bidding intervals in which the particular reserve has a high price. Thirdly, the use of energy from the optional alternative energy supply 105 should be scheduled to periods of low cost for the alternative energy. Fourthly, the self-consumption of energy from the optional co-located (renewable) energy generator 110 should be scheduled to reduce grid fees and taxes. One or more of these objectives may be comprised in the operation plan, as described later in more detail.

The scheduler 106 may, for example, consider a 24h period starting from midnight, as this is the minimum optimization horizon for participating on day-ahead markets. The horizon can be extended using the technique of rolling window optimization.

Reserves can provide up regulation, down regulation or both. Up regulation is needed in underfrequency conditions of the power grid 101, and it involves generators producing more power to the power grid 101 or consumers (such as the energy storage charger 102) reducing their consumption. Down regulation is needed in overfrequency conditions of the power grid 101, and it involves generators generating less or consumers consuming more.

In Europe: the primary reserve is FCR (Frequency Containment Reserve), the secondary reserve is aFRR (automatic Frequency Restoration Reserve) and the tertiary reserve is mFRR (manual Frequency Restoration Reserve).

In the example of the energy management system 100, at least the controller 107, the energy storage charger 102 and the energy storage 103 should be prequalified with the TSO 108 to ensure the ability to meet the technical specification of the reserves. The scheduler 106 should be configured with information on what reserves the energy generation site 180 has been prequalified for and what are the limits of the power response that it can provide for each reserve. The scheduler 106 may then plan beforehand for specific time intervals (t) whether to participate on certain reserves and what amount of power response capability to commit for reserve purposes. In other words, the information on what reserves the energy generation site 180 is prequalified for (and the power limits) may be comprised in the said operation plan and may be obtained from the TSO 108 (e.g., comprised in the information on the one or more intervals of the at least one energy market).

As one of the objective of the energy storage charger 102 is to charge the energy storage 103 in order to satisfy the offtake 104, the electricity consumption of the energy storage charger 102 in the absence of any frequency regulation is defined as the baseline, and the power response is defined as an increase or decrease of the power consumption of the energy storage charger 102 with respect to this baseline.

Therefore, the scheduler 106 cannot plan the participation on reserves without planning the baseline consumption. The baseline consumption is an electricity purchase from the power exchange 109. Both the power exchange 109 and TSO 108 use bidding mechanisms involving price signals to incentivize participants to schedule their energy use in a way that balances the power grid 101.

The FCR market considered in the description is symmetric in the sense that a power capacity bid to the market involves a commitment to monitor the grid frequency during the bidding hour and to perform either up regulation or down regulation in the event of frequency deviations, so that the change in generation or consumption of the regulating asset, actuated by the controller 107, will be determined according to the measured frequency deviation and the size (in MW) of the power capacity bid, as defined in the technical specification of the TSO 108. Such a symmetric FCR market is in place in many European countries, with the name FCR-N being used in Northern Europe.

As an example of an asymmetric reserve, the aFRR market according to the European PICASSO standard has separate Up and Down markets. During each bidding interval, it is possible to make separate bids on either the aFRR Up market, the aFRR Down market, or both. The Controller 107 is required to react to aFRR activation signals from the TSO and adjust the power generation or consumption of the reserve resource according to the power capacity (specified in MW) or the bid.

In some countries, especially those adhering to the PICASSO standard, the day-ahead aFRR capacity market may be complemented with an intraday aFRR energy market. The bidding interval of the energy market may be shorter than the bidding interval of the capacity market. There is a separate gate closure for each bidding interval of the aFRR energy market. For example, currently in Austria the bidding interval for the aFRR energy market is 15min and the gate closure is 25min before the start of the bidding interval. An example embodiment of the description provided in the detailed description uses a 15min interval.

As discussed above, one objective is to optimize the behavior of the scheduler 106, such that the function of satisfying the offtake 104 is met at all times, and that maximal grid balancing benefits are provided, while optionally using the alternative energy supply 105 whenever its cost is lower than electrical energy generation. Additionally, if the co-located energy generator 110 is present, self-consumption of the generation is advantageous to reduce grid fees and taxes. As there are several mechanisms for providing grid balancing benefits, there is an optimization problem in deciding about which mechanisms to use at which time intervals to maximize the total benefits. The benefits are quantified in terms of the price signals of the bidding mechanism. A mathematical formulation of the optimization is provided in the detailed description. The optimization problem may involve maximizing an objective.

This mathematical formulation may comprise the said operation plan - in other words, the scheduler 106 may prepare/determine the mathematical formulation of the optimization problem (e.g., "prepare the operation plan") and solve it. Optionally, the scheduler 106 may have access to a software and a hardware platform that is capable of solving the optimization problem.

One such maximization objective may comprise a Constrained Quadratic Model (CQM) as based on a following Eq. 1:

$$\sum_t a_t x_t + \sum_{t \le u} b_{tu} x_t x_u + c, \qquad (1)$$

which is subject to constraints C as defined by a following Eq. 2:

$$\sum_t a_t^{(m)} + \sum_{t \le u} b_{tu}^{(m)} x_t x_u + c^{(m)} \circ 0, m = 1, \dots, C, \qquad (2)$$

wherein $\{x_t\}_{t=1,\dots,N}$ can be a binary-, integer-, or continuous variables, wherein $a_t$, $b_{tu}$ and $c$ are real values and $\circ \in \{\le, \ge, =\}$,

and m is an index for the constraints. E.g., if m=5, Eq.2 specifies the 5th constraint of the optimization problem.

Fig. 2 illustrates a block diagram of an example computing embodiment 200 configured to solve the maximization objective described in Eq.'s 1 and 2. A computing apparatus may comprise the computing embodiment 200, for example.

The computing embodiment 200 may comprise scheduling application 202 (e.g., run on the scheduler 106) and a hybrid solver 204. The hybrid solver 204 may have access to both classical computing hardware 206 and quantum computing hardware 208. The hybrid solver 204 may decompose the optimization problem to subproblems, some of which may be solved on the quantum computing hardware 208 and the rest on the classical computing hardware 206. The quantum computing hardware 208 may comprise quantum annealing hardware, for example. The hybrid solver 204 may then return the result to the scheduling application 202. The result may comprise a set of values for the variable $x_t$ that maximizes the objective.

Available platforms for solving the problems may comprise, for example, CQM of D-wave, with two limitations. Firstly, for binary variables, the range of the quadratic-term summation is t < u because $x^2 = x$ for binary values {0,1} and $s^2 =$ 1 for spin values {-1, 1}. Secondly, continuous variables may not be supported in quadratic interactions of the form $x_t x_u$. The scheduling application 202 (i.e., the scheduler 106) should respect both of these limitations.

In one example embodiment, the energy storage charger 102 participates on FCR, aFRR capacity up and down and aFRR energy up and down. The provided example embodiment may be applicable in other markets.

For example, the European MARI standard for mFRR is similar to the aFRR market discussed herein, especially related to the bidding aspects that are relevant to this description. In Northern European countries, the FCR-N market is similar to the FCR presented in the detailed description, and there is an additional FCR-D market which is similar from the bidding perspective, but there are separate Up and Down markets for FCR-D. Additionally, some countries have a separate FFR (Fast Frequency Reserve) market, and the bidding aspects of FFR relevant to this description are similar to FCR-D Up; in both of these markets, the energy storage charger 102 is compensated for monitoring grid frequency and reducing its consumption in underfrequency situations.

For reserve activation, the concept of baseline may be used. If there is no transaction with the power exchange 109 and no generation from the Co-located energy generator 110, the baseline is zero. In this case, the energy storage charger 102 and the energy storage discharger 111 are on standby until there is a reserve activation signal 130. In case of up regulation, the discharger 111 is activated and in case of down regulation, the charger is activated 102. If there is a buy transaction or if there is co-located energy generator 110, the baseline is the sum of the bought power and locally generated power, so for down regulation the activation is added to the baseline and for up regulation the activation is subtracted from the baseline. In the latter case, the up regulation may be performed by the scheduler 106 either by decreasing the electricity consumption of the charger 102 or by increasing the electricity generation of the discharger 111, or both.

The scheduler 106 may obtain information on the one or more intervals of the at least one energy market from the power exchange (i.e., bidding/market info 142) and the TSO 108 (i.e., bidding/market info 140). Furthermore, the scheduler 106 may be configured to provide a bid to the power exchange 109. From the TSO 108, the scheduler 106 may obtain information such as reserve market prices and procurements as well as various datasets about the status of the transmission system network. This information can be used to forecast the prices on the reserve markets for the time period in which the scheduler 106 schedules the assets.

As discussed above, the scheduler 106 cannot plan the participation on reserves without planning the baseline consumption. The baseline consumption may be the electricity purchase from the power exchange 109. Both the power exchange 109 and TSO 108 use bidding mechanisms involving price signals to incentivize participants to schedule their energy use in a way that balances the power grid 101. In other words, the operation plan may comprise at least the baseline consumption (i.e., the electricity purchase from the power exchange 109).

Furthermore, one or more of the following listed symbols/terms are used to define the objective and constraints presented in Eq.'s 1 and 2. Since index t is used for the hours of the day-ahead markets in the provided example embodiment, the same index cannot be used for the 15 minute intervals for the aFRR energy market. The index $t'$ is used for these sub-intervals (e.g., the 15 minute intervals of aFRR market(s)). For example, there are 96 15 minute intervals in a 24h period.

$DA\_energy_t$ is an energy buy bid in MWh (Megawatt Hours) for hour t on the day-ahead market of the power exchange 109. A negative sign means that the energy generation site 180 will be a net seller of energy. The buy bid may be equal to the energy consumed from the power grid 101 by the energy storage charger 102, minus the energy delivered to the power grid 101 from the Co-located energy generator 110, minus the energy delivered to the power grid 101 by the energy storage discharger 111. In the embodiment illustrated in the equations, the expected energy consumption of reserve activation may also be considered in the buy bid, but this may be omitted depending on the reserve participations rules of the country in question.

$DA\_price_t$ comprises a buying price for hour t on the day-ahead market of the power exchange 109.

$Alt\_energy_t$ comprises an energy in MWh delivered by the alternative energy supply 105 on hour t.

$Alt\_cost_t$ comprises an energy cost from the alternative energy supply 105 on hour t.

**FCR_capacity$_t$** comprises a MW capacity that the energy storage charger 102 bids on the FCR market on hour $t$. The value must be nonnegative.

**FCR_price$_t$** comprises a FCR market price on hour $t$. It should be noted that this is not necessarily the same as the price of the bid.

**aFRR_Up_capacity$_t$** comprises a MW capacity that the energy storage charger 102 bids on the aFRR Up capacity market on hour $t$. The value must be nonnegative.

**aFRR_Up_price$_t$** comprises an aFRR Up capacity market price on hour $t$. It should be noted that this is not necessarily the same as the price of the bid.

**aFRR_Down_capacity$_t$** comprises a MW capacity that the energy storage charger 102 bids on the aFRR Down capacity market on hour $t$. The value must be nonnegative.

**aFRR_Down_price$_t$** comprises an aFRR Down capacity market price on hour t. It should be noted that this is not necessarily the same as the price of the bid.

**aFRR_Up_energy$_{t'}$** comprises a MW capacity that the energy storage charger 102 bids on the aFRR Up energy market on the 15min interval $t'$. The value must be nonnegative.

**aFRR_Up_energy_price$_{t'}$** comprises an aFRR Up energy market price on the 15min interval $t'$. It should be noted that this is not necessarily the same as the price of the bid.

**aFRR_Up_activation$_{t'}$** comprises a percentage of time in the 15min interval $t'$ when the aFRR energy up bid is activated. In other words, the compensation from the TSO on the aFRR energy market is based on activation. This is not known at bidding time, so a statistical average value can be used.

**aFRR_Down_energy$_{t'}$** comprises a MW capacity that the energy storage charger 102 bids on the aFRR Down energy market on the 15min interval $t'$. The value must be nonnegative.

**aFRR_Down_energy_price$_{t'}$** comprises an aFRR Down energy market price on the 15min interval $t'$. It should be noted that this is not necessarily the same as the price of the bid.

**aFRR_Down_activation$_{t'}$** comprises a percentage of time in the 15min interval $t'$ when the aFRR energy down bid is activated. In other words, the compensation from the TSO 108 on the aFRR energy market is based on activation. This is not known at bidding time, so a statistical average value can be used.

**fee_and_tax_sell$_t$** comprises grid fees and applicable taxes, e.g. in EUR/MWh, when selling energy to the grid on hour $t$. It is noted that if this value is nonzero, there is an incentive to self-consume the renewable generation on site to avoid the fees and taxes.

**sell_energy$_t$** comprises an energy sold to the power grid 101 from the site during hour $t$. It is the energy produced by the Co-located energy generator 110 that is not self-consumed on site by the energy storage charger 102. This value is 0 if the site is a net consumer of energy on hour $t$.

**fee_and_tax_buy$_t$** comprises grid fees and applicable taxes, e.g. in EUR/MWh, when buying energy from the grid on hour t. It is noted that if this value is nonzero, there is an incentive to self-consume the renewable generation on site to reduce the energy bought from the grid.

**buy_energy$_t$** comprises an energy bought from the grid to the site during hour $t$. It is the energy consumed by the energy storage charger 102 minus any energy that is delivered to the grid from the Co-located energy generator 110. This value is 0 if the energy delivered to the grid is greater than the energy consumed from the grid on hour $t$.

For further clarification, any symbol/term including 'price', 'cost', 'activation' or 'fee' are to be considered real value constant, and the rest can be considered optimization variables, which can be either continuous or integer.

In other words, the information on the one or more intervals of the at least one energy market received by the scheduler 106 may comprise any terms that include 'price', 'cost', 'activation', or 'fee'.

'Preparing the operation plan' may comprise setting up the maximization problem in such a way, that one or more of the optimization variables, such as DA_energy$_t$, Alt_energy$_t$, FCR_capacity$_t$, buy_energy$_t$, etc., are to be solved by setting, at least a portion, of the information on the one or more intervals of the at least one energy market as constraints. This may depend on the configuration of the energy generation site 180, as it depends, which entities are present in the site - as the site may not have the co-located energy generator 110, for example.

The scheduler 106 may be further configured to provide a bid to the power exchange 109, based on one or more of the above described symbols/market parameters. The bid may comprise, for example, buy_energy$_t$ and sell_energy$_t$.

Eq. 3 provides a maximization objective that conforms to the formulation in Eq. 1. For further clarification, the terms that have 'price', 'cost', 'activation' or 'fee' in their name are real valued constants, and the rest are optimization variables, which may be either continuous or integer. Integers are needed in the case that the market operator requires the bid sizes to be in certain discrete intervals, e.g. 1MW, 2MW, 3MW, etc.

$$\sum_{t=0}^{23} DA\_energy_t * DA\_price_t$$

$$- \sum_{t=0}^{23} Alt\_energy_t * Alt\_cost_t$$

$$+ \sum_{t=0}^{23} FCR\_capacity_t * FCR\_price_t$$

$$+ \sum_{t=0}^{23} aFRR\_Up\_capacity_t * aFRR\_Up\_price_t$$

$$+ \sum_{t=0}^{23} aFRR\_Down\_capacity_t * aFRR\_Down\_price_t$$

$$+ \sum_{t'=0}^{95} aFRR\_Up\_energy_{t'} * aFRR\_Up\_energy\_price_{t'} * aFRR\_Up\_activation_{t'}$$

$$+ \sum_{t'=0}^{95} aFRR\_Down\_energy_{t'} * aFRR\_Down\_energy\_price_{t'} * aFRR\_Down\_activation_{t'}$$

$$+ \sum_{t=0}^{23} buy\_energy_t * fee\_and\_tax\_buy_t + \sum_{t=0}^{23} sell\_energy_t * fee\_and\_tax\_sell_t \quad (3)$$

The reserve market bids may specify a price and a capacity (in MW). In many countries, these are pay-as-cleared markets, in which the TSO 108 sorts the bids according to the price and procures the required capacity by accepting the bids in ascending order of price, so that all accepted bids get the clearing price, which was the price of the most expensive bid that was accepted. Thus, floor price strategy can be used, where the owner of the reserve resource would prefer to be left out of the market rather than participating in the event that the cleared price would be below the floor price specified by the owner.

Furthermore, following input(s) may be required to specify the constraints, which can be treated as constant values in the optimization problem:

$renewable\_generation_t$ comprises an electrical energy generated by the Co-located energy generator 110 during hour $t$.

$offtake_t$ comprises offtake of energy from the energy storage 103 to the offtake 104 during hour $t$. The unit of the offtake depends on the embodiment. For example, if the storage is an electric boiler, the unit of the offtake could be kWh of thermal energy. In another example, if the storage is a hydrogen tank, the unit of the offtake could be kg of hydrogen or Nm3 of hydrogen.

$SoC_{init}$ comprises a State of Charge of the energy storage 103 at the beginning of hour 0. The unit of SoC depends on the embodiment. For example, with an electric boiler it could be kWh of thermal energy and with a hydrogen storage it could be kg of hydrogen.

$max\_power$ comprises maximum power of the energy storage charger 102.

$min\_power$ comprises minimum power of the energy storage charger 102 if the energy storage discharger 111 is not present, otherwise min_power is set equal to the negative of the maximum power of the energy storage discharger 111. E.g. is the maximum power of the energy storage discharger 111 is 5MW, min_power is -5MW.

$min\_SoC$ and $max\_SoC$ comprises limits for $SoC_t$ that the scheduler must respect for every time interval $t$.

$consumption_t$ comprises an energy consumption of the energy storage charger 102 during hour $t$. This does not include the impact of reserve participation.

$activated\_energy\_up_t$ comprises a total activated energy in the different reserve markets in the up direction on hour $t$. FCR is not considered since it is a symmetric market and grid frequency deviations are statistically equally likely in both directions.

**activated_energy_down$_t$** comprises a total activated energy in the different reserve markets in the down direction on hour $t$. FCR is not considered since it is a symmetric market and grid frequency deviations are statistically equally likely in both directions.

**abs_DA_energy$_t$** comprises an absolute value of DA_energy$_t$.

**production$_t$** comprises an energy produced into the energy storage 103 by the operation of the energy storage charger 102 during the hour $t$. The unit of production is the same as the unit of the offtake.

**SoC$_t$** is the state of charge of energy storage 103 at the end of hour $t$.

**aFRR_Up_energy_binary$_t$** is 1 if the energy market bid on the 15min interval $t$ is nonzero, and 0 otherwise.

**generation$_t$** comprises an electrical energy generated into the power grid 101 by the energy storage discharger 111.

Unless otherwise specified, the constraints are defined for all values of $t$ and $t'$ in the optimization window. For example in the 24h window from midnight to midnight, the values of $t$ are from 0 to 23 and the values of $t'$ are from 0 to 95.

As the aFRR energy market is in a different timescale, Eq. 4 may be used to specify an hourly impact of aFRR participation on electric energy consumption. For example, if $t$ is 1 (corresponding to hour 01:00-02:00), the summation limits for $t'$ are from 4 to 7, i.e, the intervals 01:00-01:15, 01:15-01:30, 01:30-01:45 and 01:45-02:00).

$$activated\_energy\_up_t =$$

$$\sum_{t'=t*4}^{(t+1)*4-1} aFRR\_Up\_activation_{t'} - aFRR\_Down\_activation_{t'} \qquad (4)$$

wherein activated_energy_down$_t$ is calculated in a similar way as in Eq. 4 for the up direction as presented in Eq. 5:

$$activated\_energy\_down_t =$$

$$\sum_{t'=t*4}^{(t+1)*4-1} aFRR\_Down\_activation_{t'} - aFRR\_Up\_activation_{t'} \qquad (5)$$

consumption$_t$ is a constrained optimization variable, since its value depend on DA_energy$_t$ according to Eq. 6:

$$DA\_energy_t = consumption_t - generation_t - renewable\_generation_t$$
$$-activated\_energy\_up_t + activated\_energy\_down_t. \qquad (6)$$

In order to determine buy_energy$_t$ and sell_energy$_t$ (as presented in Eq. 3), helper variable abs_DA_energy$_t$ may be used. Since the formulation in Eq. 1 and Eq. 2 does not permit the use of the absolute value function, a technique known to experts in mathematical optimization can be used. Eq. 3, Eq. 7 and Eq. 8 jointly ensure that abs_DA_energy$_t$ is the absolute value of DA_energy$_t$ as follows:

$$-abs\_DA\_energy_t \leq DA\_energy_t \qquad (7)$$

$$abs\_DA\_energy_t \geq DA\_energy_t \qquad (8)$$

Wherein now buy_energy$_t$ and sell_energy$_t$ can be obtained as per Eq. 9 and Eq. 10:

$$buy\_energy_t = 0.5 * (DA\_energy_t + abs\_DA\_energy_t) \qquad (9)$$

$$sell\_energy_t = 0.5 * (abs\_DA\_energy_t - DA\_energy_t). \qquad (10)$$

Further, buy_energy$_t$ and sell_energy$_t$ may be comprised in the bid provided to the power exchange 109.

The energy generation site 180 may usually have a contract with a power utility that specifies maximum power flow limit through the grid coupling. Penalties for exceeding this limit even momentarily are very high, so in the description the maximum power flow limit may be treated as a hard constraint. This description is concerned with the behavior of the scheduler 106 which does not perform real-time control but only considers hourly energy flows, so the following constraints ensure that the total energy consumed from the power grid 101 or produced to the power grid 101 during the hour is within limits. The limit may be different for buying and selling and is denoted as LIMIT_BUY and LIMIT_SELL. The end user may configure these limits to consider possible fluctuation in renewable generation. Eq. 11 and Eq. 12 enforce these limits:

$$consumption_t - generation_t - renewable\_generation_t \\ + aFRR\_Energy\_down_{t'/4} \leq LIMIT_{BUY} \qquad (11)$$

$$-consumption_t + generation_t + renewable\_generation_t \\ + aFRR\_Energy\_up_{t'/4} \leq LIMIT_{SELL} \qquad (12)$$

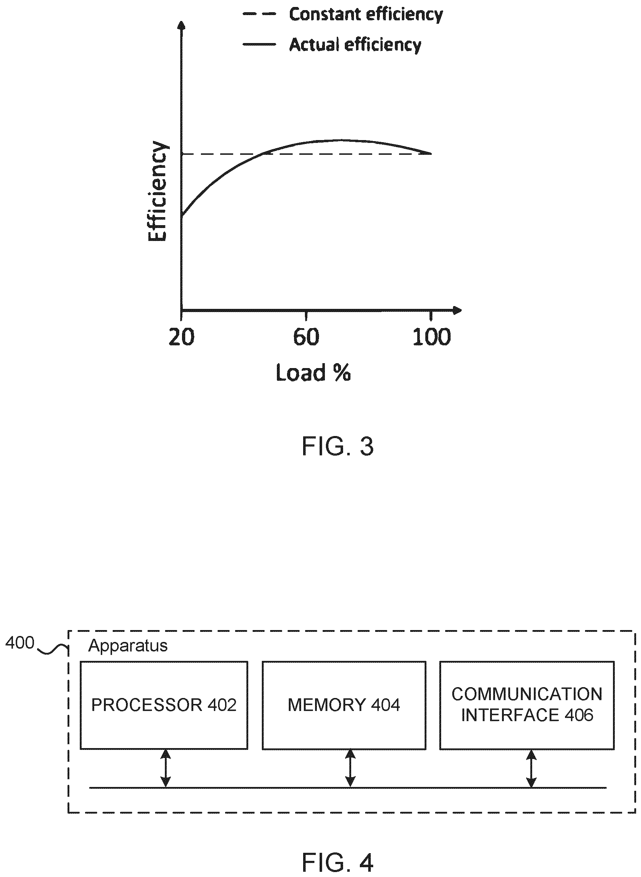

Fig. 3 illustrates an example efficiency curve of the energy storage charger 102.

The energy storage charger 102 may be modelled by a constraint that specifies the relationship between its electricity consumption and its production into the energy storage 103. Eq. 13 uses a constant value for EFFICIENCY as illustrated by the dashed line in Fig. 3, in which load refers to the quantity in brackets in Eq. 13. This is to model the heating element of an electrical boiler. However, if the energy storage charger 102 would be an electrolyzer, the electrolyzer vendor usually provides an efficiency curve such as the solid line in Fig. 3. Modifications to Eq. 13 can be made so that EFFICIENCY is modelled as a piecewise linear interpolation of the solid curve in Fig. 3.

$$production_t = EFFICIENCY * (consumption_t \\ - activated\_energy\_up_t \\ - generation_t + activated\ energy\ \_down_t) \qquad (13)$$

If the energy storage discharger 111 is present, EFFICIENCY is half of the round-trip efficiency when the energy storage charger 102 is used to first charge the storage and then the energy storage discharger 111 is used to generate electricity from the stored energy. A negative value for $production_t$ means that the net effect of using the charger and discharger resulted in the energy storage 103 being discharged on hour t.

The constraints in Eq. 14 and Eq. 15 may be used to model the SoC of the energy storage 103. The difference in SoC from one hour to the next is equal to the difference of the energy charged into the energy storage 103 and the energy delivered to the offtake from energy storage 103 and to the power grid 101 with the optional energy discharger 111. The energy storage 103 will always supply the remainder of the offtake 104 that is not covered by the alternative energy supply 105. Since the alternative energy supply 105 can only be used to cover the momentary offtake, it cannot be used to charge the energy storage 103, so its energy production may never exceed the offtake as specified in Eq. 16.

$$SoC_0 - SoC_{init} = production_0 + Alt\_energy_0 - offtake_0 \qquad (14)$$

$$SoC_t - SoC_{t-1} = production_t + Alt\_energy_t - offtake_t \qquad (15)$$

$$Alt\_energy_t \leq offtake_t. \qquad (16)$$

In many countries with a separate day-ahead aFRR capacity market and intraday aFRR energy market, for any time interval *t* in which there is an accepted capacity market bid, there may be an obligation to place an aFRR energy market bid, so that the MW capacity of the energy bid is greater than or equal to the capacity bid, which is specified in a simplified version of Eq. 17, in which the right hand side is set to 0.

$$aFRR\_Up\_capacity_{\frac{t}{4}} - aFRR\_Up\_energy_t \\ \leq M * (1 - aFRR\_Up\_energy\_binary_t) \qquad (17)$$

$$aFRR\_Up\_energy_t \leq M * aFRR\_Up\_energy\_binary_t. \qquad (18)$$

In some embodiments, there is an additional possibility to use two pricing levels in bidding: a floor price and a high price. With the high price in the bid, there is a low probability of the bid being activated. If the optimizer decides to use the high price, the optimizer will estimate that the bid will not be activated, which is modelled as aFRR_Up_energy being zero for the hour $t$. Thus, it may be necessary to define constraints that specify that the aFRR energy bid must either be zero or greater than or equal to the capacity market bid of the corresponding market interval, and this is achieved jointly by Eq. 17 and Eq. 18.

$M$ is an integer that is at least as large as the highest value of aFRR_Up_energy that is considered possible (e.g., "Big M technique"). $M$ can be arbitrarily large, but unnecessarily large values can increase computational complexity. It is notable that in this example embodiment, the capacity market has hourly intervals, and the energy market has 15 min intervals, so in Eq. 17, the index $t$ is for the 15 min intervals, and the integer division $t/4$ is used for the index of the capacity market. The interval $t=0$ always starts at midnight 00:00. For example, if $t=7$, this is the interval 01:45-02:00 and the interval 7/4 for the capacity market is 1, i.e. the hour 01:00-02:00. Eq. 17 and Eq. 18 specify the constraint for the up direction and similar constraints are required for the down direction.

Furthermore, Eq. 18 ensures that aFRR_Up_energy_binary$_t$ will always be 1, if the aFRR energy market bid on interval t is nonzero. If aFRR_Up_energy_binary$_t$ is 1, then the additional constraint in Eq. 17 will ensure that the energy market bid is greater than or equal to the capacity market bid in the corresponding market interval. If aFRR_Up_energy_binary$_t$ is 0, then Eq. 18 will ensure that the aFRR energy bid is zero, and Eq. 17 will always hold when the value of M is greater than the largest possible aFRR MW bid.

The energy storage charger 102 may have a maximum and minimum power. All bids must be constrained so that even in the worst-case scenario of FCR or aFRR activations, these power limits should not be exceeded. consumption$_t$ is the energy in MWh used by the energy storage charger 102 on hour $t$. Since the market interval in the provided example is 1h, it is also the power in MW being sold. This is the baseline for reserve activation, so the worst-case scenario for maximum power consumption involves a complete down regulation on the FCR and aFRR Down market, as specified in Eq. 19, in which the index $t$ is for the 15min intervals. Similarly, Eq. 20 specifies the minimum power constraint.

$$\text{max\_}power \geq consumption_{t/4} + FCR\_capacity_{t/4} + aFRR\_Down\_energy_t \quad (19)$$

$$\text{min\_}power \leq consumption_{t/4} - FCR\_capacity_{t/4} - aFRR\_Up\_energy_t. \quad (20)$$

Furthermore, Eq. 21 and Eq. 22 may ensure that limits of the energy storage 103 are never exceeded as follows:

$$\text{min\_}SoC \leq SoC_t \qquad (21)$$

$$SoC_t \leq \text{max\_}SoC. \qquad (22)$$

The detailed example provided through Eq. 3 to Eq. 22 is at least one solution to the bid optimization problem that can be done daily before the gate closure for day-ahead bidding. After the gate closure of day-ahead markets, it may be desirable to repeat the optimization for the bids of the intraday markets. A person skilled in the art will be able to modify the detailed example as follows for this purpose.

In other words, the operation plan prepared by the scheduler 106 may comprise the examples provided through Eq. 3 to Eq. 22, or portions thereof - and the operation plan may be sent to a separate computing device (such as the hybrid solver 204) to be solved.

For even further example embodiments, the acceptance of bids for day-ahead markets becomes known after the gate closure, and the values of the accepted bids should thereafter be treated as constants rather than as optimization variables. In the embodiment provided in this detailed description, the optimization window for day-ahead optimization starts at midnight, but the intraday optimization window can start at any time, for example it can be repeated every 15min, so that SoCinit will be the most recent SoC measurement from the energy storage 103. Transactions with the power exchange 109 can be as follows for intraday markets:

DA_energy$_t$ may comprise a constant value, which is the accepted bid in the day-ahead market of the power exchange 109 for hour $t$. A new optimization variable **intraday_energy$_t$** is defined as an energy to be bought from the intraday market of the power exchange 109. Eq. 6 can be modified as provided in Eq. 23.

$$DA\_energy\_t + intraday\_energy_t = consumption_t - generation_t$$
$$-renewable\_generation_t$$
$$- activated\_energy\_up_t + activated\_energy\_down_t. \qquad (23)$$

In another example embodiment, it may not be possible or desirable to fix the offtake 104 at the time of day-ahead bidding. A third party may take care of scheduling the release of energy from energy storage 103 to the offtake 104 as well as the SoC management of the energy storage 103. This party may specify a total electrical energy consumption of the energy storage charger 102 for the duration of the optimization window, e.g. the 24h period from midnight to midnight which is of interest in day-ahead optimization. This is defined as daily consumption and specified in Eq. 24. Additionally, the third party may specify minimum and maximum values for consumption$_t$, so inequality constraints would need to be added to enforce each of these values. In this embodiment, the constraints involving the variables SoC and production are not needed.

$$\sum_{t=0}^{23} consumption_t = daily\_consumption \qquad (24)$$

Eq. 24 provides a constraint for daily consumption of the energy storage charger 102.

In another example embodiment, there may be a secondary energy storage (or a tertiary energy storage etc.) in addition to the at least one energy storage 103. The purpose of the secondary storage is to enable higher bids on reserve markets. For example, if the energy storage 103 is an electric boiler, the secondary storage may be a battery storage. The secondary storage may have a separate energy storage charger and energy storage discharger; in the case of a battery, a bidirectional inverter can serve the purpose of both the charger and discharger. The following terms can be defined for the secondary storage (or tertiary etc.):

**max_secondary_charge_power:** a maximum power that can be drawn from the grid to charge the secondary storage

**max_secondary_discharge_power:** a maximum power that can be supplied to the grid by discharging the secondary storage.

When the secondary storage is present, Eq. 19 and Eq. 20 can be modified as in Eq. 25 and Eq. 26.

$$\max\_power + \max\_secondary\_charge\_power \geq$$
$$consumption_{t/4} + FCR\_capacity_{t/4} + aFRR\_Down\_energy_t \qquad (25)$$

$$\min\_power - \max\_secondary\_discharge\_power$$
$$\leq consumption_{t/4} - FCR\_capacity_{t/4} - aFRR\_Up\_energy_t \qquad (26)$$

In some embodiments, the energy storage 103 may be a LER (Limited Energy Resource). The storage is classified as a LER if it is not able to continuously activate the prequalified reserve power for 2 hours both to the up and down directions. For example, several Northern European countries such as Finland have additional requirements for bidding a LER on FCR markets. These countries have a separate FCR-N and FCR-D market. In this description, FCR-N is an alternative name for the FCR market that has been discussed elsewhere in this description. FCR-D is an additional market that is used to procure reserves that activate automatically when the Power grid 101 experiences large frequency deviations. There is a separate Up and Down market for FCR-D. The following optimization variables can be defined for FCR-D:

**FCR_D_Up_capacity$_t$** is a MW capacity that the energy storage charger 102 bids on the FCR-D Up market on hour t. The value must be nonnegative.

**FCR_D_Down_capacity$_t$** is a MW capacity that the energy storage charger 102 bids on the FCR-D Down market on hour *t*. The value must be nonnegative.

And the following configuration parameters are defined if the energy storage 103 is a LER:

**energy_up** is an energy in MWh that the energy storage 103 is able to deliver for up regulation when the initial SoC is of the storage is half full.

**energy_down** is an energy in MWh that the energy storage 103 is able to deliver for down regulation when the initial SoC is of the storage is half full.

For example, according to the FCR specification of the TSO 108 in Finland, Sweden, Norway and Denmark, if the energy storage 103 is a LER, 2 additional constraints are required as specified in Eq. 27 and Eq. 28 as follows:

$$FCR\_capacity_t + 0.33 * FCR\_D\_Up\_capacity_t \leq energy\_up \quad (27)$$

$$FCR\_capacity_t + 0.33 * FCR\_D\_Down\_capacity_t \leq energy\_down \quad (28)$$

Fig. 4 illustrates a block diagram of an apparatus 400 configured to practice example embodiments discussed above. The apparatus 400 may comprise at least one processor 402 and at least one memory 404 comprising program code (in other words, program instructions) . The apparatus 400 may comprise the scheduler 106. In some embodiments, the apparatus 400 may be configured to perform portions of the functionality of the scheduler 106. The apparatus 400 may also include other elements, such as a communication interface 406. The communication interface may be configured to enable the apparatus 400 to transmit and/or receive information to/from other devices, as well as other elements not shown in Fig. 4. In one example, the apparatus 400 may use the communication interface 406 to transmit or receive signalling information and data in accordance with at least one cellular communication protocol. In another example, the communication interface 406 may be configured to, for example, provide the operation schedule to the controller 107, as illustrated at 120 in Fig. 1. The communication interface 406 may be configured to provide at least one wireless radio connection, such as for example a 3GPP mobile broadband connection (for example, 5G or 6G). The communication interface may comprise or be configured to be coupled to at least one antenna to transmit and/or receive radio frequency signals. Alternatively, the communication interface 406 may comprise a wi-fi interface configured to provide and obtain data according to the description.

Although the apparatus 400 is depicted to include only one processor 402, the apparatus 400 may include more than one processor. In an embodiment, the at least one memory 404 is capable of storing instructions, such as an operating system and/or various applications. Furthermore, the at least one memory 404 may include a storage that may be used to store, for example, at least some of the information and data used in the described embodiments.

Furthermore, the at least one processor 402 is capable of executing the stored instructions. In an embodiment, the at least one processor 402 may be embodied as a multi-core processor, a single core processor, or a combination of one or more multi-core processors and one or more single core processors. For example, the at least one processor 402 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, the at least one processor 402 may be configured to execute hard-coded functionality. In an embodiment, the at least one processor 402 may be embodied as an executor of software instructions, wherein the instructions may specifically configure the at least one processor 402 to perform the algorithms and/or operations described herein when the instructions are executed.

The at least one memory 404 may be embodied as one or more volatile memory devices, one or more non-volatile memory devices, and/or a combination of one or more volatile memory devices and non-volatile memory devices. For example, the at least one memory 404 may be embodied as semiconductor memories (such as mask ROM, PROM (programmable ROM), EPROM (erasable PROM), flash ROM, RAM (random access memory), etc.).

In an example embodiment of the apparatus 400, when executed by at least one processor 402, instructions stored in at least one memory 404 may cause the apparatus 400 at least to obtain information on one or more intervals of at least one energy market. The information on the one or more intervals of the at least one energy market may comprise one or more from the list of symbols provided above in the description, such as DA_price_t, Alt_cost_t, etc. The information on the one or more intervals of the at least one energy market may be obtained by, for example, the operations 140 and 142 as described in reference to Fig. 1 and the at least one energy market may comprise, for example, the day-ahead FCR market or the like.

Furthermore, in the above example embodiment, instructions stored in at least one memory 404, when executed by the at least one processor 402, may further cause the apparatus 400 at least to: determine, based on the information on the one or more intervals of the at least one energy market, an operation plan for an energy generation site (e.g., the energy generation site 180) comprising at least one energy storage (e.g., the energy storage 103); and obtain, based on the operation plan, an operation schedule for the energy generation site.

For example, the apparatus 400 may be configured to obtain (i.e., determine) the operation schedule by itself by solving a maximization objective, such as the one described above. In other example, the apparatus 400 may prepare/determine the mathematical formulation for the optimization problem, such as the one presented through the described equations, and the prepared operation plan may be provided to a separate computing machine, such as the hybrid solver 204. In other words, the 'obtaining the operation schedule' may comprise, for example, that either the apparatus 400 determines the operation schedule or a non-local computing device determines the operation schedule and the apparatus 400 obtains it.

The operation schedule can be obtained via, for example, the communication interface 406. Further, the information on the one or more intervals of the at least one energy market may be obtained from the TSO 108 and/or the power exchange 109 via, for example, the communication interface 406.

The operation schedule may comprise, for example, the solved optimization variables. In another example, the operation schedule may further comprise, for example, set points for the controller 107 for each interval. The set points may be determined from the solved optimization variables, for example. In other words, the set points can be determined from the solved optimization variables.

In even further example, the 'obtaining the operation schedule' may comprise, for example, i) obtaining the solved optimization variables and ii) determining set points for the controller 107 based on the solved optimization variables.

Furthermore, in the above example embodiment, instructions stored in at least one memory 404, when executed by the at least one processor 402, may further cause the apparatus 400 at least to provide the operation schedule, causing the energy generation site to at least: satisfy an energy offtake (e.g., offtake 104) of the energy generation site by using the at least one energy storage; and balance the power grid 101 for at least one of the one or more intervals of the at least one energy market. This step is illustrated at operation 120 in Fig. 1, when the scheduler 106 provides the operation schedule 120 to the controller 107. In other words, the operation schedule may be provided to a controller comprising control functionality over at least the at least one energy storage 103. Control functionality over the at least one energy storage may comprise, for example, control over energy storage charger 102 and/or the energy storage discharger 111.

Furthermore, the energy offtake can be satisfied for at least one interval from the one or more intervals of the at least one energy market - in other words, the energy offtake may not be dependent on the market per se, but the operation schedule may determine when the offtake is satisfied (e.g., during some intervals) .

In another example embodiment of the apparatus 400, instructions stored in at least one memory 404, when executed by the at least one processor 402, may further cause the apparatus 400 at least to determine the operation plan based on a constrained quadratic model (CQM) optimization problem. In other words, the operation plan is based on the CQM optimization problem described above.

In another example embodiment of the apparatus 400, instructions stored in at least one memory 404, when executed by the at least one processor 402, may further cause the apparatus 400 at least to: provide the operation plan to a computing device; and obtain the operation schedule in response to the providing the operation plan to the computing device. In other words, the computing device may comprise the hybrid solver 204. In another example embodiment of the apparatus 400, the computing device (204) comprises quantum computing hardware (208).

In another example embodiment of the apparatus 400, the energy generation site further comprises an alternative energy supply (e.g., the alternative energy supple 105), and the instructions, when executed by the at least one processor 402, further cause the apparatus at least to: obtain a cost signal (e.g., the cost signal 150) from the alternative energy supply; and determine the operation plan further based on the cost signal to satisfy the energy offtake.

In another example embodiment of the apparatus 400, the instructions, when executed by the at least one processor 402, further cause the apparatus 400 at least to: obtain information on which frequency balancing reserves the energy generation site is prequalified for and limits of a power response the energy generation site can provide for each frequency balancing reserve it is prequalified for; and determine the operation plan further based on the information on the frequency balancing reserves. The information on the frequency balancing reserves can be obtained from the TSO 180 as illustrated at operation 140 in Fig. 1.

In another example embodiment of the apparatus 400, the operation schedule comprises scheduling instructions for an energy storage charger (e.g., the energy storage charger 102) configured to charge the at least one energy storage, and wherein the scheduling instructions causes the energy storage charger at least to exploit the energy storage such that the utilization of the energy storage charger is shifted to time intervals with lower energy demand in the power grid.

In another example embodiment of the apparatus 400, the scheduling instructions for the energy storage charger further causes the energy storage charger to use the energy generator such that a maximum power flow limit at a grid coupling is not exceeded. E.g., the power limit at the grid coupling for the energy storage charger 102 are constraints in the maximization objective.

In another example embodiment of the apparatus 400, the scheduling instructions for the energy storage charger further causes the energy storage charger to ensure that several simultaneous services provided by the energy storage charger will not cause the energy storage charger's minimum or maximum power flow limit to be exceeded. E.g., the chargers minimum and maximum power flow limits are considered constraints in the maximization objective.

For example, the operation schedule for the energy generation site may comprise instructions for specific time intervals t with high demand, and ensure that for these high demand intervals, the energy generator 110 does not overload the coupling to the power grid 101 and instead directs the energy to the energy storage 103.

In another example embodiment of the apparatus 400, the operation schedule for the energy generation site 180 further comprises scheduling instructions for the energy storage discharger 111 to discharge the at least one energy storage 103 for each of the one or more intervals of the at least one energy market to balance the power grid. For example, for intervals with high demand for the power grid 101, the discharger 111 should be utilized along with the energy generator 110 to ensure proper frequency balancing.

Scheduling instructions may comprise the set points for the controller 107, for example.

In another example embodiment of the apparatus 400, the instructions, when executed by the at least one processor 402, further cause the apparatus 400 at least to: obtain a bid to the power exchange 109; and provide the bid to the power exchange 109.

In another example embodiment of the apparatus 400, the bid is obtained based on at least two different pricing levels. For example, the floor price and the high price. With the high price in the bid, there is a low probability of the bid being activated. If the optimizer decides to use the high price, the optimizer will estimate that the bid will not be activated, which is modelled as aFRR_Up_energy being zero for the hour t. Thus, it is necessary to define constraints that specify that the aFRR energy bid must either be zero or greater than or equal to the capacity market bid of the corresponding market interval, and this is achieved jointly by Eq. 17 and Eq. 18.

In another example embodiment of the apparatus 400, the at least one energy market comprises at least one day-ahead market and one or more intraday markets. This example embodiment can be implemented by following Eq. 23 and the related the description, wherein the intraday_energy$_t$ parameter is introduced.

In another example embodiment of the apparatus 400, one or more of the frequency balancing reserves is an automatic frequency restoration reserve (aFRR).

In another example embodiment of the apparatus 400, the energy generation site further comprises a secondary energy storage, and the instructions, when executed by the at least one processor 402, further causes the apparatus 400 at least to: determine the operation plan for the energy generation site further based on: a maximum power that can be drawn from the power grid to the secondary energy storage and; a maximum power that can be supplied to the grid by discharging the secondary storage. This example embodiment refers to the section in the description, wherein max_secondary_charge_power and max_secondary_discharge_power parameters are introduced.

In another example embodiment of the apparatus 400, the at least one energy storage 103 is a Limited Energy Storage (LER). This embodiment refers to the section, wherein FCR_D_Up_capacity$_t$, FCR_D_Down_capacity$_t$, energy_up and energy_down parameters are introduced.

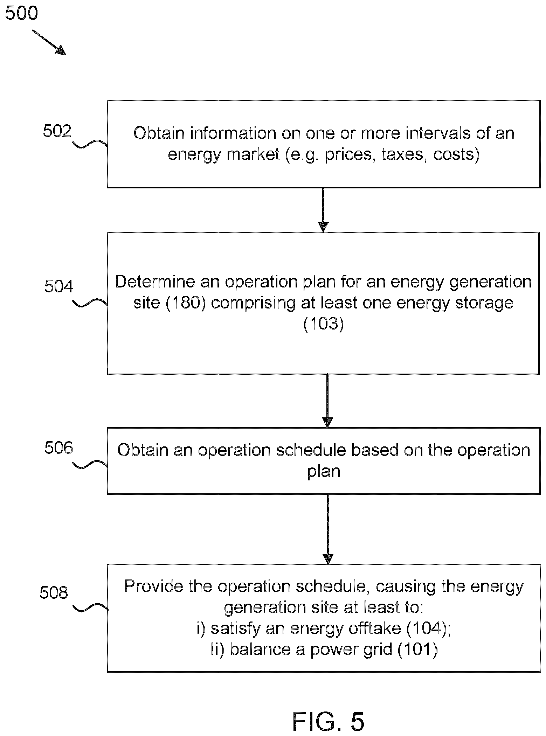

Fig. 5 illustrates a method 500 according to an example embodiment. The method 500 may be performed by an apparatus comprising, for example, at least one processor and at least one memory. An example embodiment of a computer program may comprise instructions causing an apparatus to perform the method 500.

At 502, the method 500 may comprise obtaining information on one or more intervals of at least one energy market.

At 504, the method 500 may comprise determining, based at least partially on the information on the one or more intervals of the at least one energy market, an operation plan for an energy generation site comprising at least one energy storage.

At 506, the method 500 may comprise obtaining, based on the operation plan, an operation schedule for the energy generation site.

And at 508, the method 500 may comprise providing the operation schedule, causing the energy generation site at least to: satisfy an energy offtake of the energy generation site by using the at least one energy storage; and balance a power grid for at least one of the one or more intervals of the at least one energy market. The operation schedule may be provided to, for example, the controller 107.

Fig. 6 illustrates an example timing diagram 600, how bids can be optimized for different markets discussed above. The boxes in the timing diagram 600 are market intervals. Bids can be placed for each market interval. A market cycle, in the context of the description, may comprise each market interval for which bids must be submitted before gate closure. For all of the day-ahead markets in the timing diagram 600, the market cycle is all of the hours of the next day. For the intraday markets in the timing diagram 600, namely the aFRR Energy U/D markets, there is a separate gate for each 15 min market interval, so the market cycle may be one market interval.

In the example timing diagram 600, current time (Wall-clock time) is 4 AM. The different day-ahead markets (FFR, FCR-N/D, aFRR capacity Up/Down, Nord Pool D-A) each have a gate closure once per day, before which the bid can be optimized for the next day. Below, an example of the intraday aFRR energy Up/Down market is illustrated between 4 AM and 6 AM. In the example, the gate closes 25 minutes (4:05) before the bidding to the aFRR energy Up/Down market (4:30) and a rolling window optimization can be done each 15 minutes and the window can be at first, for example, the 4:00 AM to 6:00 AM window and extended up to, for example, the next day 12:00 PM.

The example timing diagram 600 may comprise an example of a Finnish energy market.

Another example of an apparatus suitable for carrying out the embodiments and examples of the apparatus 400 disclosed herein, and with regards to Fig.'s 1 - 4 may comprise at least: means for obtaining information on one or more intervals of at least one energy market; mean for determining, based at least partially on the information on the one or more intervals of the at least one energy market, an operation plan for an energy generation site comprising at least one energy storage; means for obtaining, based on the operation plan, an operation schedule for the energy generation site; and means for providing the operation schedule, causing the energy generation site at least to: satisfy an energy offtake of the energy generation site by using the at least one energy storage; and balance a power grid for at least one of the one or more intervals of the at least one energy market.

'The means' may comprise, for example, at least one processor and at least one memory comprising instructions which, when executed by the at least one processor, causes an apparatus to perform the described functionality.

One or more of the example and example embodiments discussed above may enable a solution which enables an apparatus to obtain an operation schedule for an energy generation site, which may be a renewable energy generation site comprising at least one energy storage. The operation schedule enables the energy generation site to satisfy an energy offtake agreement and further balance the power grid. The operation schedule may be determined by the apparatus, or alternatively, at least partially on a computing environment not comprised in the apparatus.

Further, one or more of the example embodiments may enable a solution in which at least some parts in determining the operation schedule may be performed outside the apparatus. This solution may increase the speed and/or efficiency the optimization problem is solved, which may be beneficial when operating in the energy markets.

In addition, one or more of the example embodiments may enable a solution in which the operation schedule is determined based on a Constrained Quadratic Model (CQM). In at least one embodiment, the CQM can be solved partially on quantum computing hardware, which may be beneficial in significantly reducing the execution time of the solver.

Further, one or more of the example embodiments discussed above may enable a solution which enables the energy storage charger 102 to be scheduled to periods of low demand corresponding to bidding intervals of the power exchange 109 with low price.

Further, one or more of the example embodiments discussed above may enable a solution which enables participation on frequency reserves scheduled to bidding intervals with high price on particular reserves. Since the maximum bid size on the reserves depends on the baseline, the described embodiment advantageously considers potential revenues from reserve participation when it optimizes the baseline operation variables/the operation schedule.

Further, one or more of the example embodiments discussed above may enable a solution which enables the alternative energy supply 105 to be scheduled to periods of low cost (e.g., cost signal 150) for the alternative energy supply 105.

Further, one or more of the example embodiments discussed above may enable a solution which enables self-consumption of energy from the energy generator 110 to be scheduled to reduce grid fees and taxes.

Further, one or more of the example embodiments discussed above may enable a solution in which the utilization of the energy storage charger 102 is shifted to time intervals with lower energy demand in the power grid 101.

At least a portion of the functionality described herein can be performed, at least in part, by one or more computer program product components such as software components. According to an embodiment, the apparatus 400 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. An apparatus (400) comprising:

   at least one processor (402); and
   at least one memory (404) comprising instructions which, when executed by the at least one processor, cause the apparatus at least to:

   obtain (142, 140) information on one or more intervals of at least one energy market;
   determine, based at least partially on the information on the one or more intervals of the at least one energy market, an operation plan for an energy generation site (180) comprising at least one energy storage (103);
   obtain, based on the operation plan, an operation schedule for the energy generation site; and
   provide (120) the operation schedule, causing the energy generation site at least to:

   satisfy an energy offtake (104) of the energy generation site by using the at least one energy storage; and
   balance a power grid (101) for at least one of the one or more intervals of the at least one energy market.

2. The apparatus (400) according to claim 1, wherein the instructions, when executed by the at least one processor (402), further cause the apparatus at least to:
   determine the operation plan based on a constrained quadratic model (CQM) optimization problem.

3. The apparatus (400) according to any of claims 1-2, wherein the instructions, when executed by the at least one processor (402), further cause the apparatus at least to:

   provide the operation plan to a computing device (204); and
   obtain the operation schedule in response to the providing the operation plan to the computing device.

4. The apparatus (400) according to claim 3, wherein the computing device (204) comprises quantum computing hardware (208).

5. The apparatus (400) according to any preceding claim, wherein the energy generation site (180) further comprises an alternative energy supply (105), and the instructions, when executed by the at least one processor (402), further cause the apparatus at least to:

   obtain a cost signal (150) from the alternative energy supply; and
   determine the operation plan further based on the cost signal to satisfy the energy offtake (104).

6. The apparatus (400) according to any preceding claim, wherein the instructions, when executed by the at least one processor (402), further cause the apparatus at least to:

   obtain (140) information on which frequency balancing reserves the energy generation site (180) is prequalified for and limits of a power response the energy generation site (180) can provide for each frequency balancing reserve it is prequalified for; and
   determine the operation plan further based on the information on the frequency balancing reserves.

7. The apparatus (400) according to any preceding claim, wherein the operation schedule comprises scheduling instructions for an energy storage charger (102) configured to charge the at least one energy storage (103), and wherein the scheduling instructions causes the energy storage charger at least to exploit the energy storage (103) such that the utilization of the energy storage charger is shifted to intervals with lower energy demand in the power grid (101).

8. The apparatus (400) according to claim 7, wherein the scheduling instructions for the energy storage charger (102) further causes the energy storage charger to use the energy generator (110) such that a maximum power flow limit at a grid coupling is not exceeded.

9. The apparatus (400) according to any one of claims 7-8, wherein the scheduling instructions for the energy storage charger (102) further causes the energy storage charger to ensure that several simultaneous services provided by the energy storage charger will not cause the energy storage charger's minimum or maximum power flow limit to be exceeded.

10. The apparatus (400) according to any preceding claim, wherein the instructions, when executed by the at least one processor (402), further cause the apparatus at least to:

   obtain a bid to a power exchange (109); and
   provide the bid to the power exchange.

11. The apparatus (400) according to claim 10, wherein the bid is obtained based on at least two different pricing levels.

12. The apparatus (400) according to any preceding claim, wherein the at least one energy market comprises at least one day-ahead energy market and one or more intraday markets.

13. The apparatus according to any preceding claim (400), wherein the energy generation site (180) further comprises a secondary energy storage, and the instructions, when executed by the at least one processor (402), further causes the apparatus at least to:
determine the operation plan for the energy generation site (180) further based on:

   a maximum power that can be drawn from the power grid (101) to the secondary energy storage and;
   a maximum power that can be supplied to the grid by discharging the secondary storage.

14. A method (500), comprising:

   obtaining (502) information on one or more intervals of at least one energy market;
   determining (504), based at least partially on the information on the one or more intervals of the at least one energy market, an operation plan for an energy generation site (180) comprising at least one energy storage (103);
   obtaining (506), based on the operation plan, an operation schedule for the energy generation site; and
   providing (508) the operation schedule, causing the energy generation site at least to:

      satisfy an energy offtake (104) of the energy generation site by using the at least one energy storage; and
      balance a power grid (101) for at least one of the one or more intervals of the at least one energy market.

15. A computer program comprising instructions causing an apparatus to perform the method of claim 14.

100

FIG. 1

FIG. 2

- - Constant efficiency
—— Actual efficiency

FIG. 3

400

Apparatus

| PROCESSOR 402 | MEMORY 404 | COMMUNICATION INTERFACE 406 |

FIG. 4

500

502 — Obtain information on one or more intervals of an energy market (e.g. prices, taxes, costs)

504 — Determine an operation plan for an energy generation site (180) comprising at least one energy storage (103)

506 — Obtain an operation schedule based on the operation plan

508 — Provide the operation schedule, causing the energy generation site at least to:
i) satisfy an energy offtake (104);
Ii) balance a power grid (101)

FIG. 5

600

Wall-clock time = 4 AM

| | 0AM | 4AM | 8AM | noon | 4PM | 8PM | 0AM | 4AM | 8AM | noon | 4PM | 8PM |

FFR

FCR-N/D

aFRR capacity
U/D

Nord Pool D-A

aFRR energy
U/D

| 4.00 AM | 4.15 AM | 4.30 AM | 4.45 AM | 5.00 AM | 5.15 AM | 5.30 AM | 5.45 AM | 6.00 AM | | 11.45 PM | 12.00 PM |

The 4.05 gate is for 4.30-4.45 market interval

Rolling window optimization can be done each 15 minutes

Legend:

Bids are fixed

Bids can be optimized

Bids are fixed and SoC is blind

0    Gate closure CET/CEST

FIG. 6

Europäisches
Patentamt
European
Patent Office
Office européen
des brevets

# EUROPEAN SEARCH REPORT

**Application Number**

EP 24 20 8338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/156186 A1 (SUN DAVID [US] ET AL) 2 June 2016 (2016-06-02)<br>* paragraph [0062] *<br>* paragraph [0068] *<br>* paragraph [0071] *<br>* paragraph [0082] - paragraph [0083]; claim 18 *<br>* paragraph [0087] *<br>* paragraph [0093] *<br>* paragraph [0129] *<br>* paragraph [0130] *<br>* paragraph [0140] - paragraph [0141] *<br>* paragraph [0152] *<br>* paragraph [0225] *<br>* paragraph [0246] *<br>* paragraph [0249] *<br>----- | 1-15 | INV.<br>H02J50/00<br><br>ADD.<br>H02J15/00 |
| X | CN 116 128 577 A (NANJING UNIVERSITY OF TECHNOLOGY) 16 May 2023 (2023-05-16)<br>* the whole document *<br>----- | 1-15 | |
| A | CN 112 364 210 A (JIANGYIN POWER SUPPLY BRANCH OF STATE GRID JIANGSU ELECTRIC POWER CO L) 12 February 2021 (2021-02-12)<br>* the whole document *<br>----- | 1-15 | **TECHNICAL FIELDS SEARCHED (IPC)**<br><br>H02J |
| A | US 2011/029142 A1 (SUN DAVID [US] ET AL) 3 February 2011 (2011-02-03)<br>* the whole document *<br>----- | 1-15 | |

The present search report has been drawn up for all claims

| Place of search | Date of completion of the search | Examiner |
|---|---|---|
| The Hague | 10 March 2025 | Papanikolaou, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8338

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2025

| Patent document cited in search report | Publication date | Patent family member(s) | Publication date |
|---|---|---|---|
| US 2016156186 A1 | 02-06-2016 | US 2011029147 A1<br>US 2016156186 A1 | 03-02-2011<br>02-06-2016 |
| CN 116128577 A | 16-05-2023 | NONE | |
| CN 112364210 A | 12-02-2021 | NONE | |
| US 2011029142 A1 | 03-02-2011 | NONE | |

For more details about this annex : see Official Journal of the European Patent Office, No. 12/82

EPO FORM P0459